# EUROPEAN PATENT APPLICATION

(11) **EP 2 242 016 A1**
(43) Date of publication of application: **20.10.2010**
(21) Application number: 10004090.6
(22) Date of filing: 16.04.2010
(51) Int. Cl.: G06Q 30/00

(54) **Touchpoint customization system**

(30) Priority: 16.04.2009 US 169892
(71) Applicant: Accenture Global Services GmbH, 8200 Schaffhausen (CH)
(72) Inventor: Roytman, Anatoly, Weston, MA 02493 (US); Symons, Matthew, Oakland, CA 94611 (US)
(74) Representative: Müller-Boré & Partner Patentanwälte

(57) **Abstract**

A system for touchpoint content action customization at a current touchpoint to achieve a business objective includes a user touchpoint data capture unit and a content action optimization engine. The content action optimization engine is configured to select a plurality of candidate content actions for the current touchpoint based on content action metadata, to determine an observed percentage of success for an observed user behavior for each of the plurality of candidate content actions based on the user group to which the user belongs, and to determine a customized content action of the plurality of candidate content actions to implement at the current touchpoint to achieve the business objective that has the highest observed percentage of success.

## Description

### PRIORITY

This application claims priority to U.S. provisional patent application serial number 61/169,892, filed on April 16, 2009, and entitled "Digital Platform", which is incorporated by reference in its entirety.

### BACKGROUND

The Internet has become increasingly popular with the consuming public and web pages on the Internet are considered powerful media for advertising. Advertisements on web pages are directly linked to the web pages as fixed inline images, while more flexible systems allow a separation of advertisement selection and placement, but offer only a random selection mechanism. Many of the methods implemented by advertisers are typically too simple to take advantage of the just-in-time selection and delivery process available with web page advertisements. Although conventional filtering techniques allow for precise targeting of the advertisements, the task of selecting whom to target what advertisement are left to largely to the advertiser. This requires extended efforts on the advertiser side, who has to rely on countless statistics and demographic studies.

### BRIEF DESCRIPTION OF DRAWINGS

The embodiments of the invention will be described in detail in the following description with reference to the following figures.

Figure 1 illustrates a system for touchpoint content action customization, according to an embodiment;

Figure 2A illustrates an example of determining candidate content actions, according to an embodiment;

Figure 2B illustrates an example of determining a customized content action, according to an embodiment;

Figure 2C illustrates an additional example of determining a customized content action, according to an embodiment;

Figure 3 illustrates a tree structure, according to an embodiment;

Figure 4 illustrates a method for touchpoint content action customization, according to an embodiment; and

Figure 5 illustrates a block diagram of a computing system, according to an embodiment.

### DETAILED DESCRIPTION OF EMBODIMENTS

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In some instances, well known methods and structures have not been described in detail so as not to unnecessarily obscure the embodiments. Also, the embodiments described herein may be used with each other in various combinations.

### 1. Overview

According to an embodiment of the invention, customized content actions are provided to a user at multiple touchpoints the user visits for a customized end-to-end user experience. A customized content action is content that is presented and/or an action that is performed. The content or action is customized based on a user and their previous interactions and other information. Examples of a customized content action may include a tactic, a strategy, a seminar, a button, a product presentation or demonstration, a product catalog, product pricing, information about a product, a social media piece, frequently asked questions presented to the user as additional information, etc.

As used herein, a "touchpoint" is a specific interaction between an entity and a user within a specific channel. An entity may be a company, another user or some other type of entity. A channel is a medium for providing one or more touchpoints. Examples of channels include the Internet, TV, radio, etc. In instances where the channel is the Internet, examples of touchpoints may be a webpage or a portion of a webpage with which the user interacts.

The customized content action provided to the user at each touchpoint is based on dynamic desired-outcome driven optimization. Thus, the system dynamically presents a customized content action to a user at each touchpoint the user visits that is driven by a desired-outcome, such as a business objective. The business objective may include selling a particular product to a user, directing the user to subscribe to a specific service, etc. Thus, a user is funneled through various touchpoints, each with a customized content action, in a customized end-to-end user experience to achieve the business objective. The system provides an enhanced automated content action selection process to provide the user with a customized user display.

### 2. System

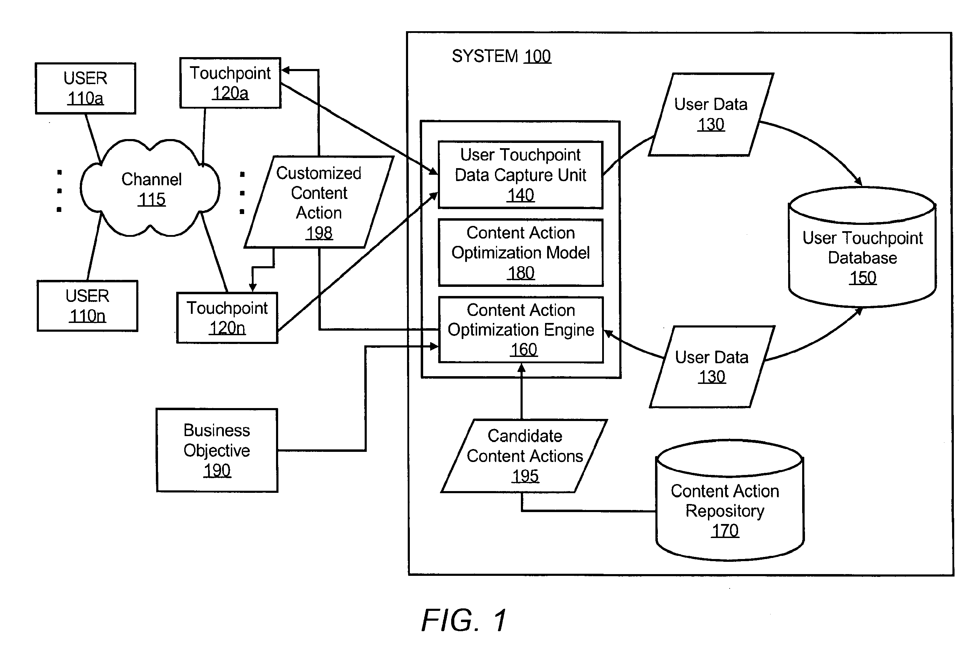

Figure 1 illustrates a system 100 for content action customization, according to an embodiment. As shown therein, the system 100 includes a user touchpoint data capture unit 140, a user touchpoint database 150, a content action optimization engine 160, a content action repository 170, and content action optimization model 180. It should be understood that the system 100 depicted in Figure 1 may include additional components and that some of the components described herein may be removed and/or modified without departing from a scope of the system 100.

Users 110a-n access touchpoints 120a-n of a specific channel 115. For example, the channel 115 is the Internet and the touchpoints 120a-n are web site touchpoints. The users 110a-n may access the web site touchpoints 120a-n through end user devices connected to the Internet, such as, computers, laptops, cellular telephones, personal digital assistants (PDAs), etc. According to an embodiment, when the users 110a-n access the web site touchpoints 120a-n, the system 100 captures user data 130. For example, the user touchpoint data capture unit 140 captures the user data 130 at each of the one or more touchpoints 120a-n that the user 110a accesses or visits. The user touchpoint data capture unit 140 may capture the user data 130 from HTML or Javascript embedded in the touchpoint 120a-n, from an agent running on a user device, from third party sources collecting user information, etc. The captured user data 130 may include historical data about the course of interaction at the touchpoints 120a-n already visited by the user, actions taken by the user and user attributes, such as gender, geographic location, purchase habits, etc.

As shown in Figure 1, the user touchpoint data capture unit 140 stores the captured user data 130 in the user touchpoint database 150. In addition, the content action optimization engine 160 is depicted as receiving the user data 130 from the user touchpoint database 150 and candidate content actions 195 from the content action repository 170. Moreover the content action optimization engine 160 is depicted as receiving a business objective 190. As discussed in greater detail herein below, the content action optimization engine 160 is generally configured to use the user data 130 as well as the content action optimization model 180 and business objective 190 to determine a customized content action 198 for each of the touchpoints 120a-n visited by the user 110a.

The content action optimization model 180 includes historic information regarding resulting user behavior in response to various content actions presented to a type or segment of users having particular user attributes at specific touchpoints 120a-n. In one example, the content action optimization model 180 includes user data grouped by attributes, touchpoints visited, content actions presented at the touchpoints and observed user behavior. For example, one group may include Asian women between 40 and 50 years. An observed user behavior for the group may include that they purchased handbags priced over $150.00 55% of the time when presented with a certain content action at a certain touchpoint. Thus, the content action optimization model 180 may include many different types of observed behavior for many different groups of users for different touchpoints, and this observed behavior may be used to estimate or predict behavior for various touchpoints and users. According to an embodiment, therefore, the content action optimization model 180 may be generated based on the analysis of observed user behavior and/or based on the analysis of historic data provided by external data sources.

Generally speaking, a company may input the business objective 190 to be achieved into the content action optimization engine 160. For example, the business objective 190 may include selling a particular product to a user, directing a user to subscribe to a specific service, or any other desired business outcome.

Based on the inputs, for instance, the content action optimization model 180, the user data 130 and the business objective 190, the content action optimization engine 160 is configured to dynamically determine the customized content action 198 to implement at a particular touchpoint 120a. By way of example, a plurality of content actions, which may may include various tactics, strategies, seminars, buttons, product presentations or demonstrations, product catalogs, product pricing, information about products, social media pieces, frequently asked questions, etc., are stored in the content action repository 170.

The content action repository 170 also includes metadata associated with each content action, which identifies each content action, describes each content action, and describes how each content action is used. The metadata also includes constraints for each content action, which describes restrictions on the use of the content action, which may be in the form of descriptors, instructional videos, etc. The constraints may describe at which touchpoint the content action may be implemented and for which business objective the content action may be used. For example, a specific content action may only be used for a specific touchpoint or for a specific segment of the population. According to an embodiment, the content actions are grouped according to corresponding business objectives and touchpoints based on the content action metadata.

The content action optimization engine 160 determines which customized content action to implement at a particular touchpoint. For example, the user 110a accesses the particular touchpoint 120a, which comprises a web page on the Internet. In order to determine the customized content action 198 to implement at the touchpoint 120a for the user 110a, the content action optimization engine 160 retrieves candidate content actions 195 from the content action repository 170. Note that in some instances the content action optimization engine 160 retrieves a single candidate content action 195. The candidate content actions 195 are retrieved based on the particular touchpoint 120a that the user 110a is visiting, as well as, the business objective 190 for which the content action is to be used. Thus, the candidate content actions 195 are retrieved based on the metadata of the content actions in the content action repository 170.

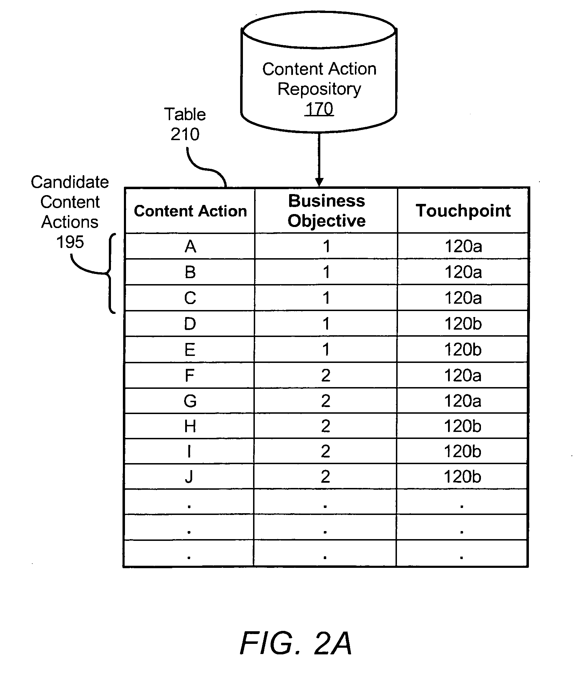

In one example, the metadata for the content actions are compared to current touchpoint information for a user to select the candidate content actions 195. For example, as shown in Figure 2A, the content action repository 170 includes the content actions listed in table 210. As shown in the table 210, content actions A, B, and C are retrieved as the candidate content actions 195 because the user is at touchpoint 120a and the business objective 190 is business objective 1. More particularly, the content actions A, B, and C may be selected and retrieved as the candidate content actions 195 based upon information contained in the metadata for the content actions A, B and C. In contrast, the metadata for content actions D-J describe the content actions D-J as either not being used for touchpoint 120a or not being for business objective 1.

Once the candidate content actions 195 are retrieved from the content action repository 170, the content action optimization engine 160 may select one of the candidate content actions 195 as the customized content action 198 to be implemented at the touchpoint 120a. In one embodiment, the customized content action 198 is the candidate content action that is most likely to achieve the business objective 1. In one example, to determine the customized content action 198, the content action optimization engine 160 identifies a user group to which the user 110a belongs by matching the user attributes for the user 110a stored in the user data 130 to the user group data in the optimization model 180. For example, the content action optimization model 180 includes data grouped by user groups. Each user group has a corresponding set of attributes that can be matched to user attributes. Each user group in the optimization model 180 may have associated categories including touchpoint visited, content action presented at the touchpoint and observed user behavior. Then, based on the user group to which the user 110a belongs, the content action optimization engine 160 identifies each of the candidate content actions 195 in the determined user group. The data associated with the identified content actions within the user group include an observed percentage of success at achieving the business objective. In addition, the content action optimization engine 160 analyzes the data associated with each of the identified content actions in the content action optimization model 180 and may select the candidate content action that has the highest percentage of the observed percentage of success at achieving the business objective as the customized content action 198 to implement for the user 110a at the touchpoint 120a. According to another embodiment, the content action optimization engine 160 uses different weighting schemes to select the customized content action 198.

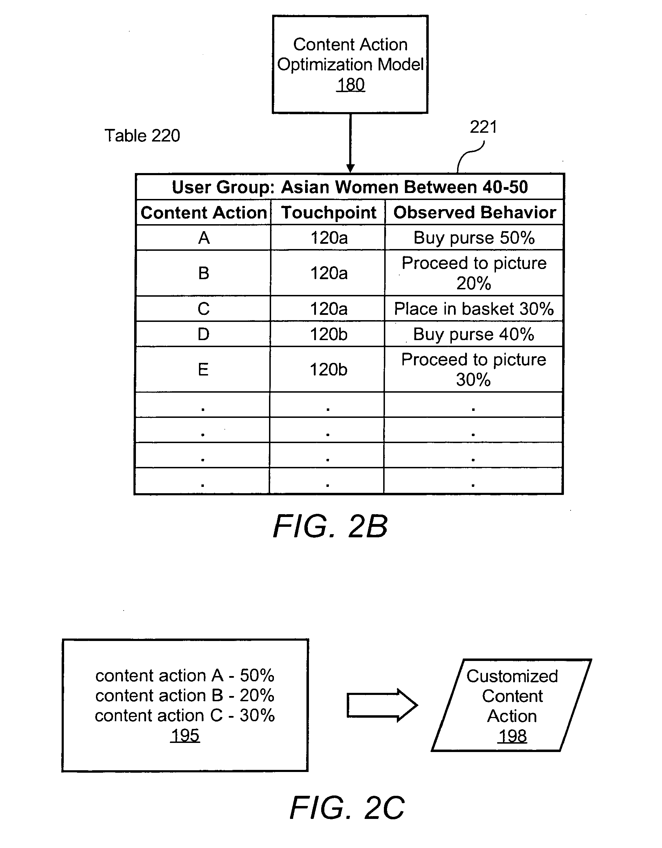

Figure 2B illustrates an example of information contained in the content action optimization model 180 for a single user group 221, shown as Asian Women in the age range of 40-50 years. For example, the user attributes in the captured user data 130 for the user 110a are compared with the user groups in the content action optimization model 180. If the user 110a is a 44-year old Asian woman, then the content action optimization engine 160 uses the subset of data in the content action optimization model 180 for the user group 221 of Asian women between 40 and 50. The user group 221 is part of a user group data subset in the content action optimization model 180 and includes content actions for several touchpoints and percentages of achieving the business objective 190 for each content action, as shown in table 220 in figure 2B. Based on the subset of data in the content action optimization model 180, the content action A has an observed behavior percentage of 50%, the content action B has an observed behavior percentage of 20% and the content action C has an observed behavior percentage of 30%. Thus, the identified content action of the candidate content actions 195 with the highest observed behavior percentage is the content action A at 50%, and therefore the content action A is the customized content action 198, as shown in Figure 2C. The customized content action 198 is then implemented at touchpoint 120a for user 110a.

The user data 130 for user 110a is then updated with data regarding the customized content action 198 that was implemented at touchpoint 120a and the user data 130 is again saved in the user touchpoint database 150.

The user 110a then may continue to the next touchpoint 120b. At touchpoint 120b, a new customized content action to implement at touchpoint 120b for user 110a is determined based on the same steps noted above, based on the additional data saved with the captured user data 130 including which content action was presented beforehand at each touchpoint visited by the user 110a, and continues until the business objective 190 is achieved. Thus, the user 110a is funneled through a plurality of touchpoints 120a-n in which a customized content action is presented at each touchpoint aimed to achieve the business objective 190, until the business objective 190 is achieved.

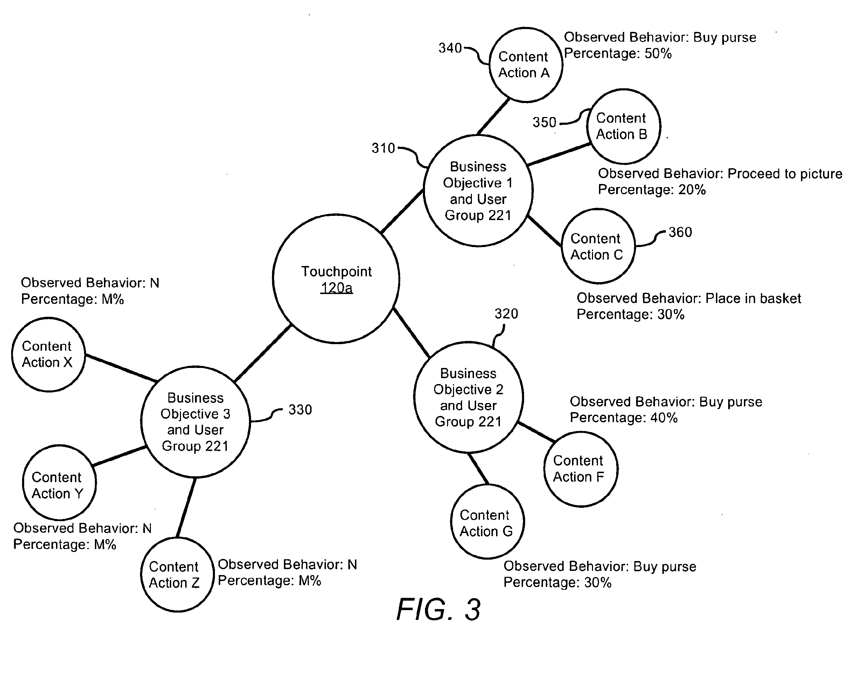

According to an embodiment, the candidate content actions 195 are branches of a tree structure. At each touchpoint, a new tree structure of candidate content actions 195 is formed since, at each touchpoint, updated user data is captured including the last touchpoint visited data and user attributes. For example, in Figure 3, at touchpoint 120a, three branches are shown as 310, 320 and 330. Each branch 310, 320 and 330, corresponds to the same user group which is determined based on user attributes as discussed above. Each branch 310, 320 and 330, is further distinguished from each other based on the business objective to which the content action sub-branches pertain. For example, for each branch 310, 320 and 330, a variety of candidate content actions 195 (A-Z) are shown. For business objective 1 and user group 221 listed as branch 310, content actions A, B and C are shown as sub-branches 340, 350 and 360, respectively. An observed user behavior and a percentage of observed user behavior success is shown for each content action sub-branch 340, 350 and 360. For example, for content action sub-branch 340, the "Observed User Behavior" is "Buy Purse" and the "Percentage" is "50%". Thus, 50% of the time, when content action A listed as 340 is implemented at touchpoint 120a, the user in user group 221 buys the purse. Thus, the tree structure formed at each touchpoint changes according to user attributes, last touchpoint visited, last content action presented, content action metadata, etc. In addition, the user is funneled through a plurality of touchpoints in which a new tree structure is formed at each touchpoint aimed to achieve the business objective, until the business objective is achieved.

### 3. Method

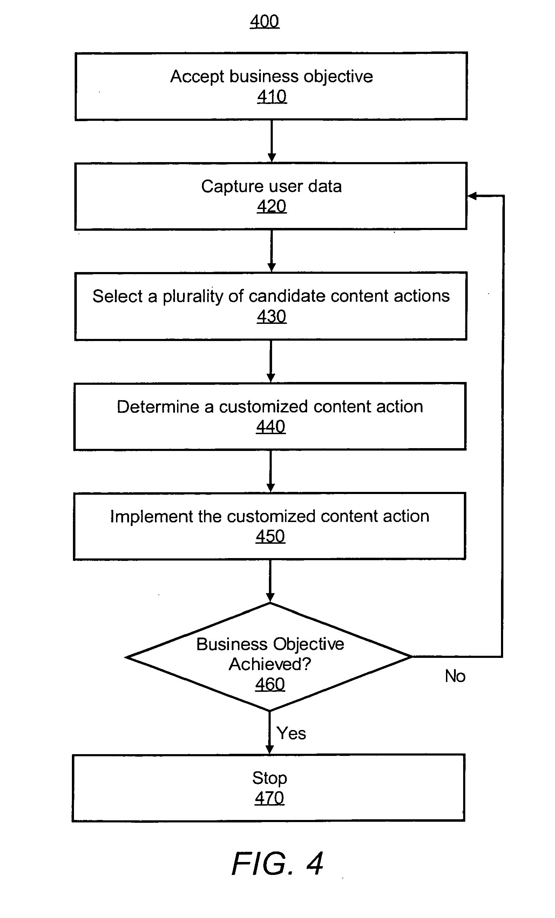

Figure 4 illustrates a flowchart of a method 400 for content action customization at a touchpoint, according to an embodiment. It should be understood that the method 400 depicted in Figure 4 may include additional steps and that some of the steps described herein may be removed and/or modified without departing from a scope of the method 400. In addition, the method 400 may be implemented by the system 100 described above with respect to Figure 1 by way of example, but may also be practiced in other systems.

At step 410, the system 100 receives input of a business objective 190. The business objective may be a business objective received from a company. For example, the business objective may be to sell a product or service.

At step 420, the system 100 captures user data of a user visiting the touchpoint. The system 100 may capture the user data from HTML or Javascript embedded in the touchpoint, from an agent running on a user device, from third party sources collecting user information, etc. The captured user data may include historical data about the course of interaction at the touchpoints already visited by the user, actions taken by the user and user attributes, such as gender, geographic location, purchase habits, etc. In addition, the captured user data is stored in the user touchpoint database and is used as input for the system 100, as is further described below.

At step 430, the system 100 selects and retrieves one or more candidate content actions 195. Based on the content action optimization model 180 as described above with regard to the system 100, the captured user data and the input business objective, the system 100 dynamically determines the candidate content actions from a plurality of content actions are stored in the content action repository 170. The plurality of content actions may include a tactic, a strategy, a seminar, a button, a product presentation or demonstration, a product catalog, product pricing, information about a product, a social media piece, frequently asked questions, etc. The content action repository 170 also includes metadata associated with each content action identifying each content action, describing each content action and describing how each content action is used. The content action repository 170 further includes constraints for each content action describing restrictions on the use of the content action, which may be in the form of descriptors, instructional videos, etc. The constraints may describe at which touchpoint the content action can be implemented and for which business objective the content action can be used. For example, a specific content action may only be used for a specific touchpoint or for a specific segment of the population. The content actions in the content action repository are grouped according to corresponding business objectives and touchpoints based on the content action metadata. The candidate content actions are retrieved based on the touchpoint the user is currently visiting and based on the business objective for which the content action may be used. Thus, the candidate content actions are retrieved based on the metadata of the content actions in the content action repository.

At step 440, once the candidate content actions are retrieved from the content action repository, the system 100 selects the customized content action to be implemented at the touchpoint. In one embodiment, the customized content action is the candidate content action that is most likely to achieve the business objective. For example, to determine the customized content action, the content action optimization engine 160 identifies a user group to which the user belongs by matching the user attributes for the user stored in the user data to the user group data in the optimization model 180. Then, based on the user group to which the user belongs, the system 100 identifies each of the candidate content actions in the determined user group. The system 100 analyzes the data associated with each of the identified content actions in the content action optimization model, in which the data associated with the identified content actions within the user group include an observed percentage of success at achieving the business objective. The system 100 may select the candidate content action that has the highest percentage of the observed percentage of success for the business objective as the customized content action to implement for the user at the touchpoint.

In step 450, the determined customized content action is implemented at the touchpoint.

In step 460, a decision is made whether the business objective has been achieved. If the customized content action implemented at the touchpoint produces the observed behavior that is equivalent to the business objective, the process moves on to step 470 where the method 400 is ended. However, if the customized content action implemented at the touchpoint does not produce the observed behavior that is equivalent to the business objective, the user moves on to the next touchpoint and the process restarts at step 420. At step 470, regardless of whether the business objective has been achieved, the captured user data is updated with data regarding the customized content action that was implemented at step 450. The user data is again saved.

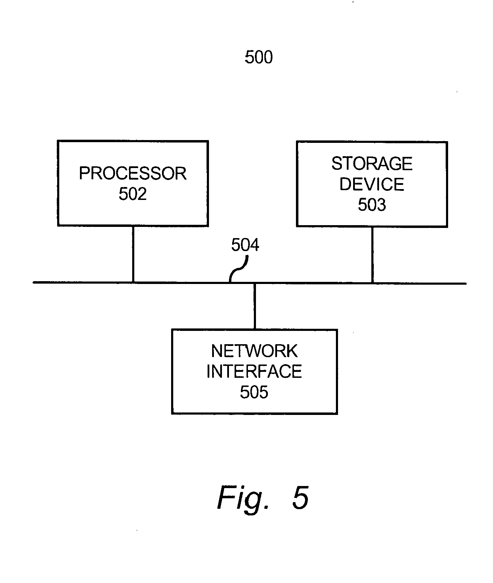

Figure 5 shows a computer system 500 that may be used as a hardware platform for the creative marketplace system 100. The computer system 500 may be used as a platform for executing one or more of the steps, methods, and functions described herein that may be embodied as software stored on one or more computer readable storage devices, which are hardware storage devices.

The computer system 500 includes a processor 502 or processing circuitry that may implement or execute software instructions performing some or all of the methods, functions and other steps described herein. Commands and data from the processor 502 are communicated over a communication bus 504. The computer system 500 also includes a computer readable storage device 503, such as random access memory (RAM), where the software and data for processor 502 may reside during runtime. The storage device 503 may also include nonvolatile data storage. The computer system 500 may include a network interface 505 for connecting to a network. It will be apparent to one of ordinary skill in the art that other known electronic components may be added or substituted in the computer system 500.
According to the above, there is particularly provided a system for touchpoint content action customization at a current touchpoint to achieve a business objective, comprising: a user touchpoint data capture unit configured to receive user data, said user data including user attributes for a user visiting the current touchpoint, and to determine a user group to which the user belongs based on the user attributes of the user; and a content action optimization engine configured to select a plurality of candidate content actions from a content action repository for the business objective and for the current touchpoint based on content action metadata, wherein said content action metadata describes the business objective for which the content action is used and the touchpoint for which the content action is used, to determine an observed percentage of success for an observed user behavior for each of the plurality of candidate content actions based on the user group to which the user belongs, and determine a customized content action of the plurality of candidate content actions to implement at the current touchpoint to achieve the business objective that has the highest observed percentage of success.
Furthermore, there is particularly provided a method for touchpoint content action customization at a current touchpoint to achieve a business objective, said method comprising: receiving user data including user attributes for a user visiting the current touchpoint; determining a user group to which the user belongs based on the user attributes of the user; selecting, using a processor, a plurality of candidate content actions from a content action repository for the business objective and for the current touchpoint based on content action metadata, wherein said content action metadata describes the business objective for which the content action is used and the touchpoint for which the content action is used; determining an observed percentage of success for an observed user behavior for each of the plurality of candidate content actions based on the user group to which the user belongs; and determining a customized content action of the plurality of candidate content actions to implement at the current touchpoint to achieve the business objective that has the highest observed percentage of success.
Furthermore, there is particularly provided a computer program product, particularly embodied as a signal, data stream and/or as a computer readable medium having stored thereon a computer executable program for touchpoint content action customization at a current touchpoint to achieve a business objective, the computer executable program when executed causes a computer system to: receive user data including user attributes for a user visiting the current touchpoint; determine a user group to which the user belongs based on the user attributes for the user; select a plurality of candidate content actions from a content action repository for the business objective and for the current touchpoint based on content action metadata, wherein said content action metadata describes the business objective for which the content action is used and the touchpoint for which the content action is used; determine an observed percentage of success for an observed user behavior for each of the plurality of candidate content actions based on the user group to which the user belongs; and determine a customized content action of the plurality of candidate content actions to implement at the current touchpoint to achieve the business objective that has the highest observed percentage of success.
Particularly, the computer readable medium further comprises implementing the customized content action at the current touchpoint.

Particularly, the computer readable medium further comprising recording a user behavior in response to implementing the customized content action at the current touchpoint.
Particularly, the computer readable medium further comprises comparing the business objective to the recorded user behavior; and if the business objective is not equivalent to the recorded user behavior, repeating the selecting, determining an observed percentage of success and determining a customized content action steps.
Particularly, the content action comprises at least one of a tactic, a strategy, a seminar, a button, a product presentation or demonstration, a product catalog, product pricing, information about a product, a social media piece, and a set of frequently asked questions.

While the embodiments have been described with reference to examples, those skilled in the art will be able to make various modifications to the described embodiments without departing from the scope of the claimed embodiments. Also, the embodiments described herein may be used to determine which content actions are undesirable, which content actions to implement that receive the most online traffic, etc.

## Claims

1. A system for touchpoint content action customization at a current touchpoint to achieve a business objective, comprising:
a user touchpoint data capture unit configured to receive user data, said user data including user attributes for a user visiting the current touchpoint, and to determine a user group to which the user belongs based on the user attributes of the user; and
a content action optimization engine configured to select a plurality of candidate content actions from a content action repository for the business objective and for the current touchpoint based on content action metadata, wherein said content action metadata describes the business objective for which the content action is used and the touchpoint for which the content action is used, to determine an observed percentage of success for an observed user behavior for each of the plurality of candidate content actions based on the user group to which the user belongs, and determine a customized content action of the plurality of candidate content actions to implement at the current touchpoint to achieve the business objective that has the highest observed percentage of success.

2. The system of claim 1, wherein the content action optimization engine is configured to implement the customized content action at the current touchpoint.

3. The system of claim 2, wherein the content action optimization engine is configured to record a user behavior in response to implementing the customized content action at the current touchpoint.

4. The system of claim 3, wherein the content action optimization engine is configured to compare the business objective to the recorded user behavior to determine if the business objective has been achieved.

5. The system of claim 4, wherein the content action optimization engine is configured to determined that the business objective has been achieved when the business objective is equivalent to the recorded user behavior.

6. The system of claim 5, wherein the content action optimization engine is configured to determine another customized content action for a next touchpoint if the business objective is not equivalent to the recorded user behavior.

7. The system of any one of the preceding claims, wherein the content action comprises at least one of a tactic, a strategy, a seminar, a button, a product presentation or demonstration, a product catalog, product pricing, information about a product, a social media piece, and a set of frequently asked questions.

8. The system of any one of the preceding claims, wherein the content action metadata for each content action further identifies each content action, describes each content action, and describes how each content action is used.

9. The system of any one of the preceding claims, wherein the content action metadata for each content action further identifies constraints for each content action's use.

10. A method for touchpoint content action customization at a current touchpoint to achieve a business objective, said method comprising:
receiving user data including user attributes for a user visiting the current touchpoint;
determining a user group to which the user belongs based on the user attributes of the user;
selecting, using a processor, a plurality of candidate content actions from a content action repository for the business objective and for the current touchpoint based on content action metadata, wherein said content action metadata describes the business objective for which the content action is used and the touchpoint for which the content action is used;
determining an observed percentage of success for an observed user behavior for each of the plurality of candidate content actions based on the user group to which the user belongs; and
determining a customized content action of the plurality of candidate content actions to implement at the current touchpoint to achieve the business objective that has the highest observed percentage of success.

11. The method of claim 10, further comprising:
implementing the customized content action at the current touchpoint.

12. The method of claim 11, further comprising:
recording a behavior of the user in response to implementing the customized content action at the current touchpoint, and preferably
comparing the business objective to the recorded user behavior; and
if the business objective is not equivalent to the recorded user behavior, repeating the selecting, determining an observed percentage of success, and determining a customized content action steps.

13. The method of any one of the preceding claims 10 to 12, wherein the content action comprises at least one of a tactic, a strategy, a seminar, a button, a product presentation or demonstration, a product catalog, product pricing, information about a product, a social media piece, and a set of frequently asked questions.

14. The method of any one of the preceding claims 10 to 13, wherein the content action metadata for each content action further identifies constraints for each content action's use.

15. Computer program product comprising computer readable instructions which, when loaded and executed on a suitable computer system perform the steps of a A method for touchpoint content action customization at a current touchpoint to achieve a business objective according to any one of the preceding claims 10 to 14.
